# EUROPEAN PATENT APPLICATION

(11) **EP 4 696 479 A1**
(43) Date of publication of application: **18.02.2026**
(21) Application number: 24194969.2
(22) Date of filing: 16.08.2024
(51) Int. Cl.: B29C 35/02, B29C 70/54, B29C 31/06, B29C 31/08

(54) **METHOD, APPARATUS AND COMPUTER PROGRAM FOR FABRICATING A FIBER COMPOSITE MATERIAL**

(71) Applicant: Technische Hochschule Deggendorf, in Vertretung des Freistaates Bayern, 94469 Deggendorf (DE)
(72) Inventor: Kölbl, Sebastian, 94513 Schönberg (DE); Li, Linmei, 84155 Bodenkirchen (DE); Wallner, Julia, 94342 Irlbach (DE)
(74) Representative: Lucke, Andreas

(57) **Abstract**

A method for fabricating a fiber composite material comprises providing a layer of a material comprising fibers. The method comprises covering a section of said layer. It also comprises providing, for forming a first portion of the fiber composite material, a first matrix precursor material to a different section of the layer. The first matrix precursor material is provided to the different section of the layer while said section of the layer is covered. The covering of said section of the layer comprises adhering a covering element to said section of the layer using magnetic force.

## Description

### FIELD OF THE DISCLOSURE

The present disclosure relates to a method and an apparatus for fabricating fiber composite materials. Specifically, the present disclosure pertains to techniques involving the use of magnetic force to adhere a covering element to a section of a fiber-containing layer during the application of a matrix precursor material to another section of the layer.

### BACKGROUND

Traditional fiber composite materials are composed of a continuous sheet of fibers, such as carbon fibers, glass fibers, or polymer fibers, embedded in a homogeneous matrix such as a polymer matrix or a ceramics matrix. Typically, the fibers are selected according to target mechanical properties, such as a target strength, stiffness, or toughness. The matrix serves as a binding material that holds the fibers in place and distributes loads among them. The matrix also provides the fiber composite material with environmental resistance, for example against mechanical or chemical influences.

Advanced fiber composite materials, also referred to as multi matrix fiber composite materials, contain sections with different matrices, typically embedding a continuous sheet of fibers. A multi matrix fiber composite material allows for combining the properties of different fiber composite materials, each corresponding to one of the sections. For example, a self-deployable panel for solar cells on a satellite requires different regions to have varying properties: structural rigidity in some areas to support the solar cells, flexibility in others to allow for deployment, and high thermal resistance to withstand the harsh space environment.

Because of their adaptability, multi matrix fiber composite materials hold the potential to be applied in a wide variety of industries, including aerospace components, automotive parts, sporting goods, and military equipment.

However, the use of multi matrix fiber composite materials is hampered by the complexity of their manufacturing.

### SUMMARY OF THE DISCLOSURE

It is an object of this invention to overcome one or more of the disadvantages of known manufacturing techniques for fiber composite materials. This is achieved with the method according to claim 1, with the apparatus according to claim 10, and with the computer program according to claim 15. The dependent claims refer to preferred embodiments.

According to a first aspect, a method for fabricating a fiber composite material comprises providing a layer of a material comprising fibers. The method comprises covering a section of the layer. It also comprises providing, for forming a first portion of the fiber composite material, a first matrix precursor material to a different section of the layer. The first matrix precursor material is provided to the different section of the layer while said section of the layer is covered. The covering of said section of the layer comprises adhering a covering element to said section of the layer using magnetic force.

A respective method, wherein a section of the layer is covered using magnetic force, allows to define a section of a multi matrix fiber material in a technologically manageable, efficient and cost-effective manner. According to known methods such as using adhesive tapes or mechanical clamps, the application of matrix materials often requires precise masking techniques to ensure that different sections of the fiber layer receive different types of matrix materials. This process can be cumbersome and may lead to contamination or incomplete coverage, affecting the performance and reliability of the final fiber composite material. The disclosed method provides a more efficient and reliable technique to apply matrix materials selectively to a section of a layer (which may also be referred to as a sheet) of a material comprising fibers.

The advantage of using magnetic force for adhering the covering element is that it provides a secure and easily adjustable method for positioning the covering element. This method is particularly useful in applications where precise placement and removal of the covering element are required, ensuring that the matrix precursor material is applied accurately to the desired sections of the fiber-containing layer.

The method preserves the flexibility of material selection which is typical for fiber composite materials, yet, this flexibility is achieved for the sections of the layer individually. For example, the (first) matrix precursor material could be a thermosetting resin, a thermoplastic resin, or a polymeric elastomer, depending on the desired properties of the final fiber composite material. The matrix precursor material binds the fibers together, providing structural integrity and enhancing the mechanical properties of the fiber composite material.

The material comprising the fibers is typically, but not necessarily, continuous from the different section, corresponding to a first portion of the fiber composite material to be produced, to said section of the layer that the covering element is or was or is to be applied to.

The material comprising the fibers could be in the form of woven fabrics, non-woven fabrics, knitted fabrics, braided structures, or other fibrous configurations.

The fibers may be made from carbon, glass, synthetic polymers such as PET, PP, PA, PLA, PAN, elastane, viscose, ceramic fibers, stone fibers like basalt, or natural fibers such as flax, hemp, or jute, or from a combination of respective materials.

The advantage of using such a variety of fibrous materials is the ability to tailor the mechanical properties, thermal resistance, and other characteristics of the fiber composite material to specific application requirements.

According to an embodiment, each of the covering elements comprises a smooth surface for attachment to the layer, such as a flat surface or a smooth curved surface for attachment to the layer.

According to an embodiment, the process step of covering and/or the covering element adhered to said section of the layer are/is adapted to prevent the first matrix precursor material from reaching said section of the layer.

In respective embodiments, the covering element acts as a barrier to the first matrix precursor material. This feature brings the advantage of ensuring that the first matrix precursor material is selectively applied only to the desired section of the layer, thereby maintaining the integrity of the covered section.

The method may be a method for fabricating a component comprising the fiber composite material, or a method for fabricating a fiber composite component, respectively.

According to some embodiments, a plurality of layers of a respective material comprising fibers may be provided, the plurality of layers comprising the layer described above. In respective embodiments, the layers of the plurality of layers may be arranged on top of each other. The layers may be of the same type (e.g., mesh or fabric, as detailed below) or may be of different ones of the respective types. They may comprise fibers of a same material (e.g. carbon fibers; glass fibers, or polymer fibers,... as detailed below) or fibers of different ones of respective materials.

Alternatively, or in addition, the different section of the layer may be different from said section of the layer.

Alternatively, or in addition, the different section of the layer may not be subject to the covering, in particular, while the first matrix material is provided.

Alternatively, or in addition, the different section of the layer may be exposed while the first matrix precursor material is provided to the different section of the layer.

The covering element may comprise a magnet, such as an electromagnet or a permanent magnet, such as a ferromagnet with a remanent polarization during the adhering.

According to some embodiments, the covering element further comprises at least one non-ferromagnetic material, such as a polymer, a fabric, wood, or a non-ferromagnetic metal. In respective embodiments, the magnet may be attached to the non-ferromagnetic material, for example embedded into the non-ferromagnetic material.

Alternatively, or in addition, the covering element may comprise a first covering element and a second covering element, wherein, during the covering of said section of the layer, the first covering element and the second covering element are arranged on opposite sides of said section of the layer and the first covering element and the second covering element adhere to each other using the magnetic force to promote the adhering of the covering element to said section of the layer. In respective embodiments, one of the first covering element and the second covering element may comprise a magnet, such as an electromagnet or a permanent magnet, such as a ferromagnet with a remanent polarization during the adhering. Further optionally, the other one of the first covering element and the second covering element may comprise a magnet or, preferably, may comprise a ferromagnetic material.

Respective embodiments provide a secure and reliable method of covering said section of the layer, which can be easily controlled and adjusted.

Alternatively, or in addition, providing the first matrix precursor material to the different section of the layer may comprise impregnating the fibers of the different section of the layer with the first matrix precursor material.

Alternatively, or in addition, providing the first matrix precursor material to the different section of the layer may comprise merging the fibers of the different section of the layer with the first matrix precursor material and/or bonding the fibers of the different section of the layer and the first matrix precursor material.

The layer of the material comprising fibers may extend continuously from said section of the layer to the different section of the layer; and/or fibers of the layer of the material comprising fibers may extend continuously from said section of the layer to the different section of the layer.According to an embodiment, the fiber composite material is a multi-matrix fiber composite material and the method is a method for fabricating the multi-matrix fiber composite material. In respective embodiments, the method further comprises, after providing the first matrix precursor material to the different section of the layer, removing the covering element from said section of the layer; and providing, for forming a second portion of the fiber composite material, a second matrix precursor material to a further section of the layer, the further section of the layer being comprised in said section of the layer which was covered while the first matrix precursor material was provided.

In respective embodiments, at least a part of the previously covered section of the layer is exposed, allowing for further processing or material application. Hence, a multi-matrix fiber composite material is created, with distinct regions formed by different matrix precursor materials, enhancing the fiber composite material's overall properties and functionality. For example, the different sections can provide different mechanical and/or chemical properties, as will be laid out in detail later.

The removing of the covering element(s) from said section of the layer may be performed after the fibers are merged or impregnated with the first matrix precursor material.

The removing of the covering element(s) from said section of the layer may be performed with a surface of the first matrix precursor material being in a solid state, or with the first matrix precursor material being in a solid state.

The multi-matrix fiber composite material may be a fiber composite material comprising at least two matrix materials merged with the layer. The at least two matrix materials may comprise the first matrix material and the second matrix material.

The multi-matrix fiber composite material may be a fiber composite material comprising at least two portions. The at least two portions may comprise the first portion and the second portion.

According to some embodiments, the first portion of the fiber composite material and the second portion of the fiber composite material correspond to different regions along the layer, for example along a lateral direction defined by the layer.

The first portion of the fiber composite material may be formed in a first region along the layer, and the second portion of the fiber composite material may be formed in a second region of the layer. In other words, at least a portion of the first portion of the fiber composite material may be arranged in the first region, and at least a portion of the second portion of the fiber composite material may be arranged in the second region. The second region may be different from the first region, for example laterally disjunct from the first region.

The method may be a method for fabricating a component comprising the multi-matrix fiber composite material, or a method for fabricating a multi-matrix fiber composite component, respectively.

The method may further comprise covering the first portion of the fiber composite material while the second matrix precursor material is provided to the further section of the layer, wherein, preferably, the covering of the first portion of the fiber composite material is performed to prevent the second matrix precursor material from reaching the first portion of the fiber composite material.

According to an embodiment, the method comprises covering a plurality of sections of the layer, the covering of the plurality of sections of the layer comprising the covering of said section of the layer as described above with reference to the first aspect, and the plurality of sections of the layer comprising said section of the layer as described above with reference to the first aspect. In respective embodiments, the covering of the plurality of sections of the layer comprises adhering a plurality of covering elements to the sections of the layer using magnetic force, wherein the adhering of the plurality of covering elements to the sections of the layer comprises the adhering of the covering element to said section of the layer as described above with reference to the first aspect, and wherein the plurality of covering elements comprises the covering element as described above with reference to the first aspect.

In respective embodiments, the process step of covering the plurality of sections of the layer is preferably performed prior to providing the first matrix precursor material.

Respective embodiments enable the simultaneous or sequential covering of multiple sections of the layer, thus permitting the manufacturing of a multi-matrix fiber composite material with multiple different matrices selected according to different target properties, such as target mechanical properties or target chemical properties.

According to some embodiments, the process step of covering the plurality of sections of the layer comprises covering an additional section of the layer, the covering of the additional section of the layer comprising adhering an additional covering element of the plurality of covering elements to the additional section of the layer using magnetic force. In respective embodiments, the additional section of the layer is covered using the additional covering element while the first matrix precursor material is provided to the different section of the layer and while the second matrix precursor material is provided to the further section of the layer. In respective embodiments, the method further comprises, after providing the second matrix precursor material to the further section of the layer, removing the additional covering element from the additional section of the layer. In respective embodiments, the method further comprises providing, for forming a third portion of the fiber composite material, a third matrix precursor material to at least a portion of the additional section of the layer or to the additional section of the layer.

Respective embodiments allow for the fabrication of multi-matrix fiber composite materials with more than two different sections, thus giving an even larger design flexibility. The method according to this description has the advantage that it is extensible in a straightforward manner towards the fabrication of multi-matrix fiber composite materials with three, four, five, or more different sections. No additional covering steps are required, the covering elements merely need to be removed in a stepwise or subsequent manner, and a different matrix precursor material - and an optional curing step if desired or needed - may be applied after each removal of a respective subset of the covering elements.

According to some embodiments, the covering of said section of the layer comprises providing the covering element on one side of said section of the layer, and providing a counter-element on the opposite side of said section of the layer. In respective embodiments, the covering element and the counter-element are adapted to provide an attractive magnetic force between them, and the covering element and the counter-element are arranged on the opposite sides of said section of the layer such that the attractive magnetic force between them exerts a compressive force onto said section of the layer.

In respective embodiments, the covering element may have one or all the features described above in the context of the first covering element. Alternatively, or in addition, the counter-element may have one or all the features described above in the context of the second covering element.

According to an embodiment, the layer of material comprising fibers comprises at least one of the following or is one of the following: mesh and fabric, such as woven fabric, knitted fabric, non-woven fabric, laid fabric, braid, gauze, wound textile, embroidered fabric.

The versatility of the method, allowing it to accommodate various forms of fiber materials, thereby broadens the scope of applications for the fabricated fiber composite material.

The fibers of the material may comprise at least one of the following or may be composed of one of the following: carbon fibers; glass fibers, such as e-glass fibers; polymer fibers such as polymer fibers containing at least one of the following: polyester, polyethylene terephthalate, polypropylene, polyamide, polylactic acid, polyacrylonitrile, spandex, viscose; ceramic fibers; stone fibers such as basalt fibers; natural fibers such as flax fibers, hemp fibers and/or jute fibers.

In particular, the fibers of the material may comprise carbon fibers.

The first matrix material may comprise or may be a polymer, such as a thermosetting polymer or a thermoplastic polymer or a polymeric elastomer; wherein, optionally, the thermosetting polymer/the thermoplastic polymer is a thermosetting polymer/a thermoplastic polymer with additives or a thermosetting polymer/a thermoplastic polymer without additives.

The respective material can thus be selected based on desired properties such as durability, flexibility, and thermal stability, thereby enhancing the performance characteristics of the fiber composite material.

For example, the first matrix material may be a polymer.

The first matrix precursor material may be a precursor material for the first matrix material, or may be adapted to be converted into the first matrix material.

The first matrix precursor material may comprise or may be a precursor material for a polymer, such as a thermosetting polymer or a thermoplastic polymer or a polymeric elastomer.

The first matrix precursor material, and optionally the second and/or the third matrix precursor material, may comprise or may be a prepolymer or a synthetic resin.

The second matrix material and/or the third matrix material may be characterized by features corresponding to the features above characterizing the first matrix material.

The second matrix precursor material and/or the third matrix precursor material may comprise a precursor material for a polymer, such as a thermosetting polymer or a thermoplastic polymer or a polymeric elastomer.

Polymers are particularly suitable for processing using the described method. Moreover, polymers are available with a wide range of properties (e.g., mechanical or chemical) and thus allow for the fabrication of tailored multi matrix fiber composite materials.

In embodiments with the plurality of sections of the layer and with the plurality of covering elements, the layer may be provided above a substrate. According to respective embodiments, the substrate and the covering elements may be adapted to provide an attractive magnetic force between the substrate and each of the covering elements, in particular when they are in contact with each other. In respective embodiments, covering the plurality of sections of the layer may comprise arranging the covering elements over the layer above the substrate to adhere the plurality of covering elements to the sections of the layer using the attractive magnetic force between the substrate and the covering elements as the magnetic force.

In respective embodiments, the substrate may be a ferromagnetic substrate, and each covering element of the plurality of covering elements may comprise a magnet.

The substrate and the covering elements may have one or all the features described above in the context of the first covering element and the second covering element; for example, the substrate may have the features of one of the first covering element and the second covering element, and the covering elements may have the features of the other one of the first covering element and the second covering element or vice versa.

Optionally, the method may comprise providing an anti-sticking layer between the substrate and the layer and/or providing an anti-sticking element between the layer and the covering elements.According to an embodiment, the method further comprises curing the first matrix precursor material to convert it into a first matrix material.

The method may further comprise curing the second matrix precursor material to convert it into a second matrix material and/or curing the third matrix precursor material to convert it into a third matrix material.

According to an embodiment, the first matrix material is adapted to provide a mechanical property different from a corresponding mechanical property of the second matrix material, and optionally different from a corresponding mechanical property of the third matrix material. In respective embodiments, the mechanical property may comprise at least one of the following or may be one of the following: elasticity, flexibility, ductility, provision of an anti-slip surface.

The curing of the first matrix precursor material may be performed prior to the removing of the covering element(s) from said section of the layer.

According to an embodiment, the first matrix material is adapted to provide a chemical property different from a corresponding chemical property of the second matrix material, and optionally different from a corresponding chemical property of the third matrix material. In respective embodiments, the chemical property may comprise at least one of the following or may be one of the following: fire resistance, UV resistance, moisture resistance, bio-degradability.

According to an embodiment, the first matrix material is adapted to provide an electrical conductivity and/or magnetic properties different from an electrical conductivity and/or magnetic properties of the second matrix material, and optionally different from an electrical conductivity and/or magnetic properties of the third matrix material.

The method may further comprise generating a transition region between the first matrix material and the second matrix material. In respective embodiments, the method may further comprise controlling an extension of the transition region by controlling a strength of the magnetic force and/or by introducing a region of enhanced density in the layer.

The method may further comprise compacting the first matrix precursor material prior to the curing of the first matrix precursor material and/or during the curing of the first matrix precursor material.

The method may further comprise compacting the second and/or the third matrix precursor material prior to the curing of the second and/or of the third matrix precursor material and/or during the curing of the second and/or of the third matrix precursor material.

According to an embodiment, the first portion of the fiber composite material corresponds to or comprises the first matrix material.

According to an embodiment, the second portion of the fiber composite material corresponds to or comprises the second matrix material.

According to an embodiment, the third portion of the fiber composite material corresponds to or comprises the third matrix material.

According to a second aspect, an apparatus for fabricating a fiber composite material comprises a covering unit. The covering unit is adapted to cover a section of a layer of a material comprising fibers. The covering of said section of the layer comprises adhering a covering element to said section of the layer using magnetic force. The apparatus further comprises a precursor-provision unit. The precursor-provision unit is adapted to provide, for forming a first portion of the fiber composite material, a first matrix precursor material to a different section of the layer. The first matrix precursor material is provided to the different section of the layer while said section of the layer is covered. The different section of the layer is not subject to the covering.

The apparatus provides an automated or robotized implementation of the method described above, with the advantages described above in the context of the method. Further, the automatization or robotization further improves the accuracy of the covering and of the application of the matrix materials and thus the accuracy of the method.

According to an embodiment, the covering unit is a robotic covering unit. Alternatively, or in addition, the covering unit may comprise a first robot adapted to perform the covering of said section of the layer.

The first robot may be equipped with sensors and actuators to accurately position and adhere the covering element to said section of the layer. This feature allows for more precise control over the covering process, which can be critical in ensuring precision and thus in quality of the fiber composite material.

The precursor-provision unit may be a robotic precursor-provision unit. Alternatively, or in addition, the precursor-provision unit may comprise a second robot adapted to perform the providing of the first matrix precursor material.

The second robot may be designed to handle and dispense the matrix precursor material with high precision, possibly using specialized nozzles or dispensers. This feature further refines the process of applying the matrix precursor material, ensuring that it is delivered accurately to the different section of the layer.

The second robot may be different from the first robot, or a single robot maybe adapted to provide both the first robot and the second robot.

The apparatus may comprise the covering element or a plurality of covering elements comprising the covering element. Alternatively, a kit may comprise the apparatus and the covering element or a plurality of covering elements comprising the covering element.

According to an embodiment, the apparatus further comprises a computer. In respective embodiments, the computer comprises at least one processor and at least one memory, and the computer is operationally coupled to the covering unit and to the precursor-provision unit. In respective embodiments, the computer is adapted to control the covering unit to perform the covering of said section of the layer, and the computer is adapted to control the precursor-provision unit to perform the providing of the first matrix precursor material.

According to an embodiment, the apparatus further comprises a removing unit adapted to remove the covering element from said section of the layer.

In respective embodiments, the removing unit may be a robotic removing unit.

The removing unit may comprise a third robot adapted to perform the removing of the covering element from said section of the layer.

In respective embodiments, the third robot may be different from the first robot, or a single robot may be adapted to provide both the first robot and the third robot.

In respective embodiments, the computer may be adapted to control the removing unit to perform the removing of the covering element from said section of the layer.

According to an embodiment, the apparatus further comprises a curing unit adapted to cure the first matrix precursor material to convert it into a first matrix material.

According to a third aspect, a computer program comprises instructions. The instructions, when the computer program is executed by a computer, such as the computer described above, cause the computer to carry out the method described above.

According to a further aspect, a non-transitory computer-readable medium has stored thereon said computer program.

### LIST OF FIGURES

In the following, a detailed description of the present disclosure and examples thereof is given with reference to the figures.
Figure 1 illustrates a method according to a first embodiment;
Figures 2 to 6 illustrate the method according to a second embodiment;
Figures 7 to 11 illustrate the method according to a third embodiment;
Figures 12 to 16 illustrate the method according to a fourth embodiment;
Figure 17 gives a close-up of a cross section of the fabricated fiber composite material according to an embodiment;
Figures 18 to 23 illustrate the method according to a fifth embodiment;
Figures 24 to 31 illustrate an apparatus according to a first embodiment;
Figure 32 illustrates the apparatus according to another embodiment;
Figure 33 illustrates the apparatus according to another embodiment;
Figure 34 illustrates the apparatus according to another embodiment; and
Figures 35 to 39 illustrate the fabricated fiber composite material.

### DESCRIPTION OF EXAMPLES

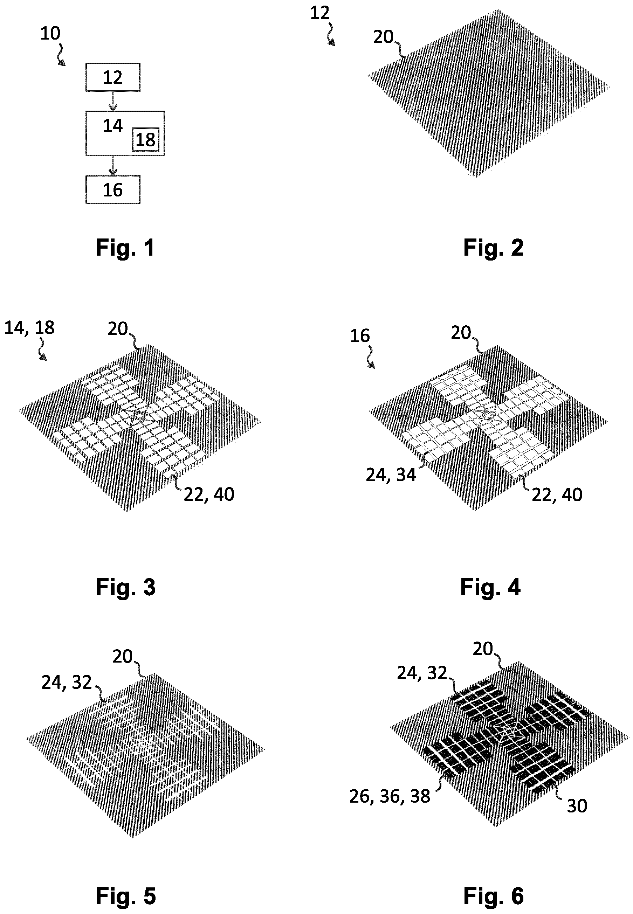

Figure 1 illustrates a method 10 for fabricating a fiber composite material 30 according to a first embodiment. The method 10 comprises the steps of providing 12 a layer 20 of a material comprising fibers; covering 14 a section 22 of the layer 20, wherein the covering 14 of said section 22 of the layer 20 comprises adhering 18 a covering element 40 to said section 22 of the layer 20 using magnetic force; and providing 16 a first matrix precursor material 34 to a different section 24 (i.e., different from said section 22) of the layer 20 while said section 22 of the layer 20 is covered.

Fig. 2 to Fig. 6 illustrate a method 10 according to a second embodiment, presenting perspective views to illustrate individual process steps. The method 10 according to the second embodiment is similar to the method 10 according to the first embodiment, and same reference numerals are used for corresponding elements and process steps.

Figure 2 illustrates in further detail the step 12, where a layer 20 of material comprising fibers is provided. The method 10 is suitable for the processing of various types of fiber-containing materials, both in terms of the chemical composition of the fibers (e.g., polymer fibers, stone fibers, metal fibers, natural fibers, carbon fibers,...) and the type (e.g., woven or unwoven or knitted fabric, mesh, ...) of layer 20, or sheet 20, respectively. In the depicted embodiment, the layer 20 is a woven fabric of carbon fibers, but the method 10 is not limited thereto. Glass and carbon fibers are usually beneficially in applications requiring high mechanical and thermal stability. Polymer fibers are cost-efficient and provide good mechanical flexibility.

In the depicted embodiment, a single layer 20 is provided. According to alternative embodiments (not shown) a plurality of layers 20, e.g., in the form of a stack of layers 20, is provided. In respective embodiments, the following, subsequent steps are applied accordingly to the plurality of layers 20.

Figure 3 illustrates the step 14 of covering a section 22 of the layer 20. In this embodiment, said section 22 is covered by adhering 18 covering elements 40 to said section 22 of the layer 20 using magnetic force. For this purpose, each of the covering elements 40 either contains a magnet or a ferromagnetic material.

In the depicted embodiment, each of the covering elements 40 comprises a permanent magnet, which is a ferromagnetic material with a remanent polarization. The use of permanent magnets makes the method 10 cost-efficient. Moreover, the permanent magnets have the advantage of maintaining their magnetization in the absence of any power supply. They can thus be used to provide the magnetic force even in places without a power supply available, and/or without a need for wiring, making the handling easier. In alternative embodiments, the covering elements 40 comprise electromagnets. These have the advantage that the magnetic force can selectively be switched on (i.e., by providing a current through the electromagnets) and off (i.e., by reducing the current through the electromagnets, for example by a factor of at least 3 or by a factor of at least 10, or by switching the current off). Hence, the electromagnet can be moved with the magnetic force being switched off, simplifying the handling, and only when the electromagnet is positioned on the layer 20 (i.e., during the covering of said section 22 of the layer 20), the current through the electromagnet is provided, thus providing the magnetic force.

In the depicted embodiment, each of the covering elements 40 is a plastic board, or a plastic foil, respectively, with a permanent-magnet layer (i.e., a layer of ferromagnetic material with a remanent magnetization) laminated thereon. In alternative embodiments (not shown), the covering elements 40 contain laminated fiber sheets or another suitable matrix with the magnets embedded therein.

A polytetrafluoroethylene (PTFE, trade name: teflon) foil (not shown) is provided as an anti-sticking element on the lower surface of each of the covering elements 40, or between the covering elements 40 and the layer 20. The polytetrafluoroethylene foil allows for easy removal of the covering elements 40 later in the process.

In some embodiments, the covering elements 40 are provided manually on the layer 20. In respective embodiments, a mask defining target positions of the covering elements 40 is typically provided (not shown) on the layer 20 prior to the covering 14 of said section 22 of the layer 20. Said section 22 of the layer 20 is then covered with the covering elements 40 according to the target positions defined by the mask. For example, a mask made from polycarbonate (PC, trade name: macrolon) has proven suitable for this purpose. In other embodiments, the covering elements 40 are provided using a robotic device, which is programmed to provide the covering elements 40 according to target positions, without a need for a mask.

Figure 4 illustrates in more detail the step 16 of providing a first matrix precursor material 34 to a different section 24 (i.e., different from said section 22) of the layer 20 while said section 22 of the layer 20 is covered by the covering elements 40.

Various applicator or dispenser systems known in the art are suitable for providing 16 the first matrix precursor material 34. Preferably, the applicator or dispenser system is configured to provide the first matrix precursor material 34 selectively in regions not covered by the covering elements 40, with only small amounts of the first matrix precursor material 34 or even none of the first matrix precursor material 34 applied onto the covering elements 40. This selectivity reduces the waste and the usage of the first matrix precursor material 34, and minimizes the contamination of the covering elements 40 with the first matrix precursor material 34. In contrast, in embodiments with a widespread application of the first matrix precursor material 34, the covering elements 40, which are to be reused in subsequent executions of the method 10, require frequent cleaning.

The first matrix precursor material 34 can be selected from a wide variety of matrix precursor materials known from the prior art, including synthetic resins, prepolymers, and thermoplastics. In the depicted embodiment, an elastomer precursor in the exemplary form of a silicone precursor is used for the first matrix precursor material 34, thus enabling elastic properties of the matrix material and the corresponding portion 32 of the composite fiber material 30 being fabricated from the first matrix precursor material 34.

The applied first matrix precursor material 34 impregnates the different section 24 of the layer 20. In other words, the different section 24 of the layer 20 is soaked with the first matrix precursor material 34.

The first matrix precursor material 34 is then converted into a first matrix material.

In an additional, optional process step (not shown) the first matrix precursor material 34 is cured to convert it into a first matrix material. The curing is performed if required by the specific first matrix precursor material 34 (or for the formation of the first matrix material, respectively). In some embodiments, for the curing, the temperature is increased according to a predefined schedule, held at preselected values for a preselected duration, and is then gradually reduced towards ambient conditions. According to some embodiments, the layer 20 and the first matrix precursor material 34 are kept in a mold during the process step 16. The presence of a mold may be desired, for example, to shape the layer 20 and the first matrix precursor material 34 into a desired, preselected form.

The described method allows for producing components of any shape that can also be achieved with conventional composite manufacturing processes, such as wet/hand laminate, fiber injection, vacuum infusion, prepreg, RTM, winding or pressing processes.

According to a first possible definition, the curing refers to converting a matrix precursor material (i.e., the first matrix precursor material 34 or the second matrix precursor material 36 or the third matrix precursor material 44, respectively) into a matrix material (i.e., into the first or second or third matrix material, respectively). According to an alternative possible definition, the curing refers to heating the matrix precursor material (i.e., the first matrix precursor material 34 or the second matrix precursor material 36 or the third matrix precursor material 44, respectively), for example to a temperature above room temperature or to a temperature above 30°C or to a temperature above 40°C. According to yet another possible definition, the curing refers to providing a waiting time interval after providing the first matrix precursor material 34, for example prior to removing the covering element 40 (or the plurality of covering elements or the additional covering element) from the respective section 22 of the layer 20. For example, the waiting time interval may be a waiting time interval of at least 5 min or of at least 10 min or of at least 30 min or of at least 1 h. According to yet another possible definition, the curing refers to heating the matrix precursor material at least for a predetermined time interval, for example a predetermined time interval of 5 min or 10 min or 30 min or 1 h, for example to a temperature above 40°C.

Optionally, a compaction (not shown) of the first matrix precursor material 34 is performed. The compaction refers to applying a reduced pressure to the first (or second, or third, respectively) matrix precursor material 34 (or 36, or 44, respectively), for example a pressure below 90 kPa or below 50 kPa. In some embodiments, the compaction is performed during the heating described above. For this purpose, a vacuum enclosure (not shown) is provided around the layer 20. According to some embodiments, a heater (not shown) for the above-mentioned heating is arranged inside of the vacuum enclosure.

In the depicted embodiment, the exemplary first matrix precursor material 34 being an elastomer precursor in the form of a silicone precursor is converted into silicone by a curing step of waiting for 2 h while the silicone precursor (and the generated silicone) is at room temperature. During this time, the silicone precursor converts into silicone. No pressure reduction, or compaction, respectively, is applied to the silicone precursor of the depicted embodiment.

When the conversion of the first matrix precursor material 34 into the silicone, i.e., the curing (and optional compaction) step, is completed, the different section 24 of the layer 20, which had been impregnated with the first matrix precursor material 34, is merged (or bonded) with the silicone, and forms a first portion 32 of the fiber composite material 30. In other words, the first portion 32 of the fiber composite material 30 is formed by the conversion of the first matrix precursor material 34 (in the example: the silicone precursor material) into the first matrix material (in the example: the silicone), preferably using curing and optionally compaction. In yet other words, the different section 24 of the layer 20, which is impregnated with the first matrix precursor material 34, defines the first portion 32 of the fiber composite material 30. In this first portion 32 of the fiber composite material 30, the material comprising fibers of the layer 20 and the first matrix material formed from the first matrix precursor material 34 are merged (or bonded).

In embodiments, wherein the first (or second, or third, respectively) matrix material is a polymer, such as a thermoplastic polymer or a thermosetting polymer or a polymeric elastomer, the conversion of the first (or second, or third, respectively) matrix precursor material 34 into the first (or second, or third, respectively) matrix material comprises a cross-linking or polymerization reaction, typically a chemical cross-linking or polymerization reaction.

After the first portion 32 of the fiber composite material 30 is formed, the covering elements 40 are removed from the layer 20, or, more specifically, from said section 22 of the layer 20, as shown in Fig. 5. In some embodiments, the removing is performed manually. However, preferably, the covering elements 40 are removed using machinery such as a robot.

In embodiments, wherein the magnetic force is provided using electromagnets, the current through the electromagnets is reduced (for example, by a factor of at least 2 or by a factor of at least 3 or by a factor of at least 10), and preferably switched off, for the removal of the covering elements 40 (for example, prior to the removal of the covering elements 40).

A second matrix precursor material 36 is applied to a further section 26 of the layer 20. In the depicted embodiment, this further section 26 of the layer 20 corresponds to the section 22 of the layer 20 previously covered by the covering elements 40. In alternative embodiments (not shown), the second matrix precursor material 36 is applied to a (further) section 26 of the layer 20 smaller than the section 22 of the layer 20 previously covered by the covering elements 40 and comprised therein. In other words, the further section 26 of the layer 20 is at least a part of the section 22 of the layer 20 exposed by the removal of the covering elements 40.

The same variety of materials described above in the context of the first matrix precursor material 34, or of the first matrix material, respectively, is also available for the second matrix precursor material 36, or for the second matrix material, respectively. The second matrix precursor material 36, or the second matrix material, respectively, is selected from said list of available materials.

The application of the second matrix precursor material 36 is performed similar to the application of the first matrix precursor material 34, using an applicator or dispenser system.

The second matrix precursor material 36 impregnates the further section 26 of the layer 20. In other words, the further section 26 of the layer 20 is soaked with the second matrix precursor material 36.

The second matrix precursor material 36 is converted into a second matrix material.

The conversion of the second matrix precursor material 36 into the second matrix material second matrix precursor material 36 preferably comprises a curing and optionally a compaction, as described above in the context of the first matrix precursor material 34.

Thus, the further section 26 of the layer 20, which had been impregnated with the second matrix precursor material 36, is merged (or bonded) with the second matrix material, thus forming a second portion 38 of the fiber composite material 30, as similarly described for the formation of the first portion 32 of the fiber composite material 30 from the first matrix precursor material 34.

In some embodiments, the formation of the fiber composite material 30 is completed with the formation of the second portion 38 of the fiber composite material 30 as shown in Fig. 6.

Alternatively, optional steps are performed (not shown) to shape the product shown in Fig. 6 into the fiber composite material 30. In respective embodiments, the product shown in Fig. 6 is cut, sawed, or milled into a final shape, thus implementing the final fiber composite material 30.

In the depicted embodiment, the second matrix precursor material 36 is epoxy resin, and the second matrix material formed from the second matrix precursor material 36 is a cured epoxy resin. The fiber composite material 30 fabricated through this method 10 is a foldable panel for supporting photovoltaic cells on a satellite. The method 10 ensures that different portions 32, 38 of the fiber composite material 30 can have different matrix materials, providing tailored mechanical, chemical, and electrical properties.

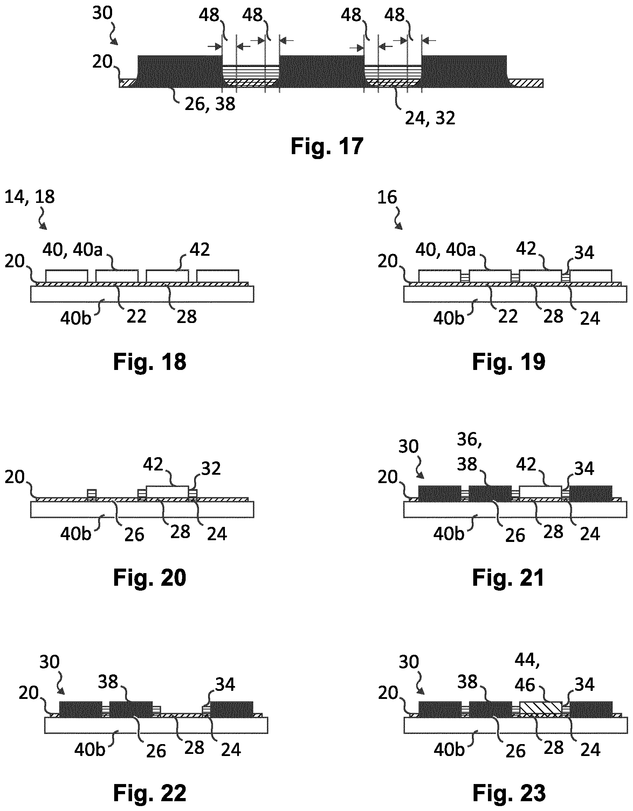

In the embodiment depicted in Fig. 2 to Fig. 6, all covering elements 40 are removed in the removal step leading to the state depicted in Fig. 5. According to alternative embodiments, which will be described below in detail with reference to Fig. 18 to Fig. 23, only some of the covering elements 40 are removed. Some (or additional, respectively) covering elements 42 remain on the layer 20. Thereafter, a matrix precursor material 36 is applied to the further section 26 of the layer 20 exposed by the removal of the respective covering elements 40, and the applied matrix precursor material 36 is cured (and optionally compacted) to form a matrix material, or a portion 38 of the fiber composite material 30, respectively. Thereafter, a further subset of the covering elements 40 which had remained on the layer 20, i.e., the additional covering elements 42, are removed, a matrix precursor material 44 is applied to the thus exposed, additional section 28, the respective matrix precursor material 44 is converted into an additional matrix material to form a third portion 46 of the fiber composite material 30, and so on. This way, even more types of matrix materials can be combined in the fiber composite material 30. In respective embodiments, the further section 26 of the layer 20 is a portion of the section 22 of the layer 20 previously covered by the covering elements 40 smaller than said section 22. The same applies to the additional section 28 of the layer 20.

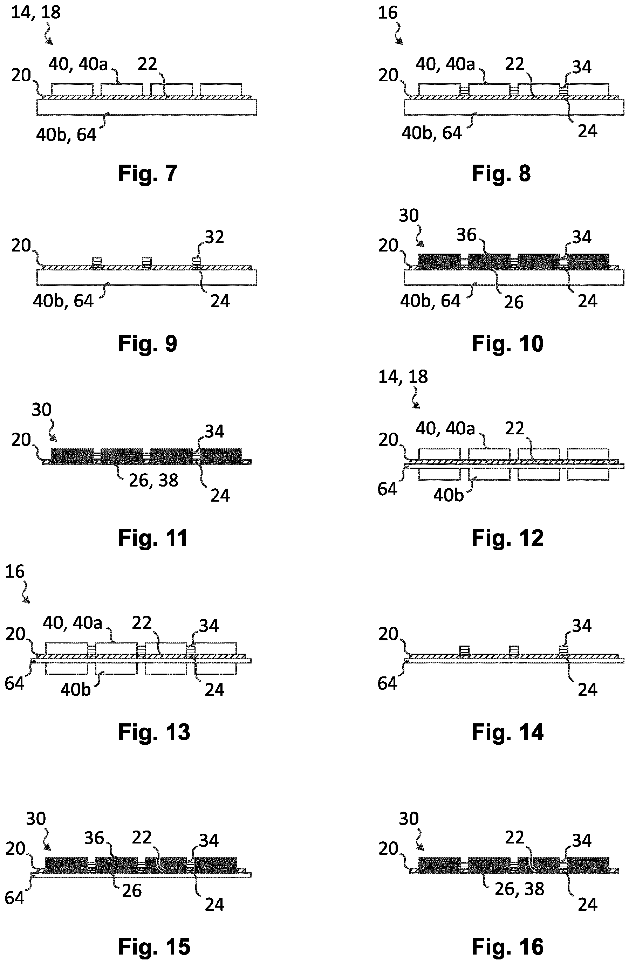

Fig. 7 to Fig. 11 illustrate the method 10 according to a third embodiment. Several elements and process steps of the method 10 according to the third embodiment are similar to the respective elements and process steps of the method 10 according to the first or second embodiment. To avoid repetition, they will not be described again. Accordingly, similar reference numerals used in the context of the different embodiments refer to similar elements and process steps. In the following description of Fig. 7 to Fig. 11, the emphasis is on the modifications as compared to the method 10 of Fig. 1 and to the method 10 of Fig. 2 to Fig. 6.

Fig. 7 to Fig. 11 illustrate the method 10 according to the third embodiment by presenting cross sectional views.

As shown in Fig. 7, a layer 20 of a material comprising fibers is provided, and a section 22 of the layer 20 is covered adhering 18 a covering element 40 to said section 22 of the layer 20 using magnetic force. These method steps are similar to the corresponding method steps described above in the context of Fig. 2 and Fig. 3.

In the depicted embodiment, the covering 14 of said section 22 of the layer 20 is achieved by providing a first covering element 40a on one side of the layer 20 (e.g., above the layer 20), and a second covering element 40b on the opposite side of the layer 20 (e.g., below the layer 20).

The first covering element 40a and the second covering element 40b are adapted to attract each other via the magnetic force. For this purpose, at least one of the first covering element 40a and the second covering element 40b comprises a magnet, such as a permanent magnet or an electromagnet as described above in the context of the method 10 according to the second embodiment.

In some embodiments, the other one of the first covering element 40a and the second covering element 40b is also a magnet, and during the covering 14 of said section 22 of the layer 20 the magnetic axes of the magnets 40a, 40b are arranged such that the magnets 40a, 40b attract each other. In alternative embodiments, the other one of the first covering element 40a and the second covering element 40b comprises a ferromagnetic material, such as iron. In respective embodiments, the magnet 40a, 40b comprised in one of the covering elements 40a, 40b magnetizes the ferromagnetic material comprised in the other one of the covering elements 40a, 40b during the covering 14 of said section 22 of the layer 20, and the interaction between the magnet 40a, 40b and the thus magnetized ferromagnetic material provides the magnetic force.

The magnetic force provides, or is, a compressive force onto said section 22 of the layer 20.

According to the example depicted in Fig. 7 to Fig. 10, the second covering element 40b is an iron sheet, or substrate 64, with the layer 20 arranged thereon. The first covering elements 40a are permanent magnets or electromagnets.

The iron sheet 40b depicted in Fig. 7 further serves as a substrate 64 to mechanically support the layer 20. The substrate 40b, 64 thus serves to ensure that the layer 20, and ultimately the produced fiber composite material 30 has a desired shape. In the depicted embodiment the substrate 40b, 64 is flat, and so is the layer 20 supported thereon, and ultimately the produced fiber composite material 30. However, according to alternative embodiments (not shown) the substrate 64 may have a more complicated shape, e.g. curved or with recesses, reflecting the shape of a desired product. In particular, the substrate 64 may be a mold or may be part of a mold (not shown). Respective embodiments allow for providing 12 the layer 20 supported on the substrate 64, and ultimately the produced fiber composite material 30, according to the shape of the desired product, which is reflected in the shape of the mold.

According to one possible definition, the covering element 40 comprises the first covering element 40a and the second covering element 40b.

According to another possible definition, the first covering element 40a is the covering element 40, and the structure 40b depicted in Fig. 7 is a substrate 64.

The respective modifications, i.e., the use of the first covering element 40a and the second covering element 40b, is described in the context of the third embodiment, but a corresponding modification can be made to any of the other embodiments as well. The same applies to the usage of a substrate 64, and the provision of the layer 20 on a substrate 64.

The covering element 40b acts as a counter-element 40b for the covering element 40a.

The respective modification, i.e., the use of a counter-element 40b, is described in the context of the third embodiment, but a corresponding modification can be made to any of the other embodiments as well.

To facilitate easy and reliable removal, an anti-sticking layer (not shown) in the form of a foil comprising polytetrafluoroethylene may be provided in between the substrate 40b, 64 and the layer 20. Alternatively or additionally, an anti-sticking layer (not shown) in the form of a foil comprising polytetrafluoroethylene may be provided in between the covering element 40a and the layer 20.

The respective modification, i.e., the use of an anti-sticking layer below/above the layer 20, is described in the context of the third embodiment, but can be made to any of the other embodiments as well.

Figure 8 illustrates the subsequent step where a first matrix precursor material 34 is provided to a different section 24 of the layer 20, similar to the provision of the first matrix precursor material 34 described in the context of Fig. 4. Said section 22 remains covered by the covering element 40, 40a during this process.

The first matrix precursor material 34 impregnates the different section 24 of the layer 20, as described above in the context of the second embodiment of the method 10.

The first matrix precursor material 34 is converted into a first matrix material. The first matrix material and the different section 24 of the layer 20 are thus merged and form the first portion 32 of the composite fiber material 30, as described in the context of the second embodiment of the method 10.

According to some embodiments, the conversion of the first matrix precursor material 34 into the first matrix material 34 uses a curing step, and further optionally a compaction step, as described above in the context of the second embodiment of the method 10.

Fig. 9 illustrates the removal of the covering elements 40, as described in the context of the second embodiment of the method 10.

Fig. 10 illustrates the application of a second matrix precursor material 36, the conversion of the second matrix precursor material 36 into a second matrix material 38, and the formation of a second portion 38 of the fiber composite material 30. The respective process steps are similar to the corresponding process steps described above in the context of the second embodiment of the method 10.

After the formation of the second portion 38 of the fiber composite material 30, the fiber composite material 30 is removed from the substrate 40b, 64, or from the second covering element 40b, respectively, as illustrated in Fig. 11. The polytetrafluoroethylene foil described above is beneficial for a reliable removal.

Fig. 12 to Fig. 16 illustrate the method 10 according to a fourth embodiment. Several elements and process steps of the method 10 according to the fourth embodiment are similar to the respective elements and process steps of the method 10 according to the first, second, and/or third embodiment. To avoid repetition, they will not be described again. Accordingly, similar reference numerals refer to similar elements and process steps throughout the description of the various embodiments. In the following description of Fig. 12 to Fig. 16, the emphasis is on the modifications as compared to the method 10 according to the foregoing embodiments.

Fig. 12 to Fig. 16 illustrate the method 10 according to the fourth embodiment by presenting cross sectional views.

As shown in Fig. 12, a layer 20 of a material comprising fibers is provided, and a section 22 of said layer 20 is covered adhering 18 a covering element 40 to said section 22 of the layer 20 using magnetic force. These method steps are similar to the corresponding method steps described above in the context of Fig. 7.

However, unlike in the embodiment of Fig. 7, wherein a single element 40b acts as the substrate 64 on the one hand, and, on the other hand, also as the second covering element 40b (or as the counter-element 40b, respectively), in the method 10 according to the fourth embodiment different elements 40b, 64 provide these different functions, as depicted in Fig. 12.

The respective modification, i.e., the use of first and second covering elements 40a, 40b and a separate substrate 64, is described in the context of the fourth embodiment, but a corresponding modification can be made to any of the other embodiments as well.

In the method 10 according to the fourth embodiment, a wide variety of materials can be used for the substrate 64, including non-ferromagnetic materials such as aluminum or a polymeric material. Consequently, the substrate 64 can be shaped using a variety of techniques, such as injection molding. This permits the economic fabrication of a substrate 64, such as a mold 64, of almost arbitrary shape.

In the depicted embodiment, each of the first and second covering elements 40a, 40b comprises a magnet, such as a permanent magnet or an electromagnet, as similarly described in the context of Fig. 7. In alternative embodiments, one of the first and second covering elements 40a, 40b comprises a magnet, and the other one of the first and second covering elements 40a, 40b comprises a ferromagnetic material, as similarly described in the context of Fig. 7.

The subsequent process steps of the method 10 according to the fourth embodiment, as depicted in Fig. 13 to Fig. 16, are similar to the corresponding process steps of the method 10 according to the third embodiment, as depicted in Fig. 8 to Fig. 11. To avoid repetition, reference is made to the corresponding description above in the context of the third embodiment.

Fig. 17 gives a close-up of a cross-sectional view of a part of a fiber composite material 30 fabricated using the method 10 according to any of the embodiments described above.

As is visible in the close up of figure 17, transition regions 48 are formed at the boundary between the first portion 32 of the fiber composite material 30 and the second portion 38 of the fiber composite material 30, or between the first matrix material and the second matrix material, respectively. In a transition region 48, both the first matrix material and the second matrix material are present. In other words, along a vertical line, or along a line perpendicular to the layer 20, respectively, in a transition region 48, both the first matrix material and the second matrix material are present.

The method 10 according to any of the embodiments described above results in the formation of a respective transition region 48. The transition region 48 may be desirable to ensure a reliable, e.g., mechanically stable, transition between the first matrix material and the second matrix material, or between the first portion 32 of the fiber composite material 30 and its second portion 38, respectively.

The method 10 beneficially permits to adjust the extent of the transition region 48, for example its lateral extension. This is achieved by adjusting the magnitude of the magnetic force, or of the compressive force onto the layer 20 resulting from the magnetic force, respectively. The adjustment of said force is achieved by the selection of a respective permanent magnet for the covering elements 40 or by the adjustment of the current through an electromagnet comprised in a covering element 40.

Alternatively, or in addition, a region of enhanced density is introduced in the layer 20 to control the extent of the transition region 48 in some embodiments of the method 10. For this purpose, a line or a curve of additional fibers is stitched into the layer 20 along the boundary between the first portion 32 of the fiber composite material 30 and the second portion 38 of the fiber composite material 30, prior to the formation of the first matrix precursor material 34.

Depending on the choice of the first matrix material and the second matrix material, and on the choice of the magnitude of the magnetic force, i.e. of the selected magnets, the width of the transition region 48 is typically in a range from 1 mm to 20 mm.

Fig. 18 to Fig. 23 illustrate the method 10 according to a fifth embodiment. Several elements and process steps of the method 10 according to the fifth embodiment are similar to the respective elements and process steps of the method 10 according to the first, second, third and/or fourth embodiment. To avoid repetition, they will not be described again. Accordingly, similar reference numerals refer to similar elements and process steps. In the following description of Fig. 18 to Fig. 23, the emphasis is on the modifications as compared to the method 10 according to the foregoing embodiments.

Fig. 18 to Fig. 23 illustrate the method 10 according to the fifth embodiment by presenting cross sectional views.

As shown in Fig. 18, a layer 20 of a material comprising fibers is provided, and a section 22 of said layer 20 is covered adhering 18 a covering element 40 to said section 22 of the layer 20 using magnetic force. These method steps are similar to the corresponding method steps described above in the context of the foregoing embodiments.

As shown in Fig. 19, a first matrix precursor material 34 for forming a first portion 32 of the fiber composite material 30 is provided to a different section 24 of the layer 20. A first matrix material, or a first portion 32 of the fiber composite material 30, respectively, is formed from the first matrix precursor material 34. These method steps are similar to the corresponding method steps described above in the context of the foregoing embodiments.

As shown in Fig. 20, the method 10 proceeds to removing the covering elements 40 from a section 26 of the layer 20. More specifically, in the process step depicted in Fig. 20, a subset of the covering elements 40 not including all the covering elements 40 is removed from the layer 20. Consequently, the uncovered section 26 of the layer 20 is a part of said section 22 of the layer 20 initially covered by the covering elements 40. The uncovered section 26 is thus smaller than said section 22 of the layer 20 initially covered by the covering elements 40. The respective section 26 of the layer 20 is also referred to as a further section 26 of the layer 20 in the context of the disclosure.

While some of the covering elements 40 are removed, one or several additional covering elements 42 remain on the layer 20, or, more specifically, on an additional section 28 of the layer 20. This additional section 28 of the layer 20 is a part of said section 22 of the layer 20 initially covered by the covering elements 40. According to some embodiments, the additional section 28 of the layer 20 is a continuous section 28. In other embodiments, in particular, if several additional covering elements 42 are used, the additional section 28 of the layer 20 comprises several regions separate from each other.

As shown in Fig. 21, a second matrix precursor material 36 for forming a second portion 38 of the fiber composite material 30 is provided to the further section 26 of the layer 20. As explained above, the further section 26 of the layer 20 is comprised in said section 22 of the layer 20 which was covered while the first matrix precursor material 34 was provided.

The provision of the second matrix precursor material 36 is performed similarly to the provision of the first matrix precursor material 34 described above in the context of the foregoing embodiments.

A second matrix material, or a second portion 38 of the fiber composite material 30, respectively, is formed from the second matrix precursor material 36. The respective method step is performed similarly to the formation of the first matrix material 32, or of the first portion 32 of the fiber composite material 30, respectively, described above in the context of the foregoing embodiments, comprising, a conversion of the second matrix precursor material 36 into the second matrix material.

As shown in Fig. 22, the method 10 proceeds to removing the additional covering elements 42 from the additional section 28 of the layer 20.

The removal of the additional covering element(s) 42 from the additional section 28 of the layer 20 is performed similarly to the removal of the covering elements 40 from the section 22 of the layer 20 described above in the context of the foregoing embodiments.

As shown in Fig. 23, a third matrix precursor material 44 for forming a third portion 46 of the fiber composite material 30 is provided to at least part of the additional section 28 of the layer 20. A third matrix material, or the third portion 46 of the fiber composite material 30, respectively, is formed from the third matrix precursor material 44. These method steps are performed similarly to the provision of the first matrix precursor material 34 and the formation of the first matrix material 32, or of the first portion 32 of the fiber composite material 30, respectively, described above in the context of the foregoing embodiments.

The method 10 according to the fifth embodiment thus allows the manufacturing of advanced multi matrix fiber composite materials 30 comprising more than two portions 34, 36 with different matrix materials. The person skilled in the art will understand that a fiber composite material 30 with any desired number of portions can be fabricated, by repeating the process steps depicted in Fig. 20 to Fig. 23, i.e., iteratively removing a subset of the covering elements 40, applying a matrix precursor material 36, 44 to the thus exposed section 26, 28 of the layer 20, converting said matrix precursor material 36, 44 into a matrix material and thus establishing the respective portion 38, 44 of the fiber composite material 30.

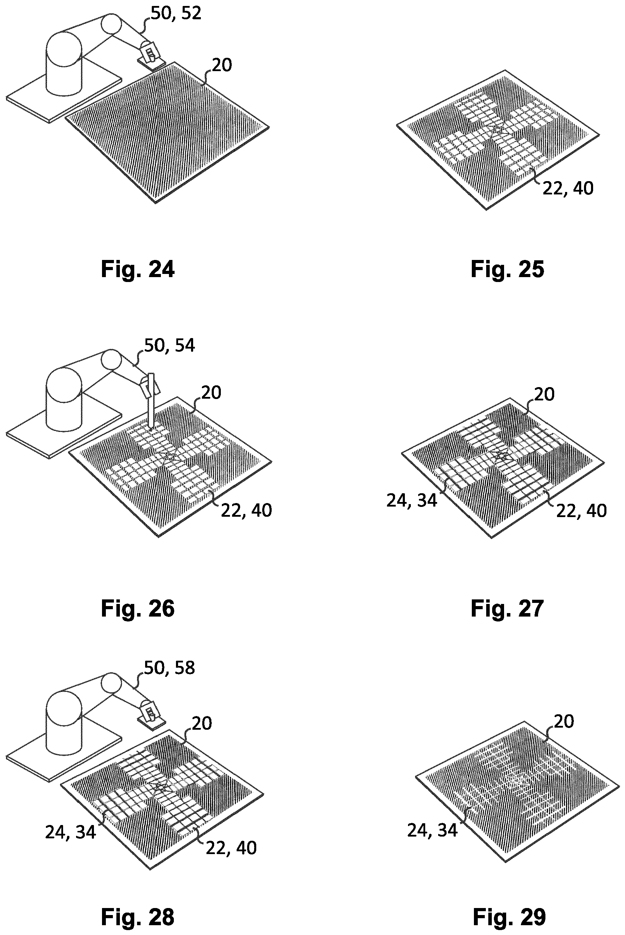

Figures 24 to 29 illustrate an apparatus 50 according to a first embodiment for fabricating a fiber composite material 30. The apparatus 50 comprises a covering unit 52, a precursor-provision unit 54, and a removing unit 58.

Figure 24 shows the initial step where the covering unit 52 of the apparatus 50 is employed to cover a section 22 of a layer 20 of material comprising fibers. In this embodiment, the material comprising fibers is a woven fabric of carbon fibers. The covering unit 52 adheres covering elements 40 to said section 22 of the layer 20 using magnetic force, as described above in the context of the method. The covering elements 40 are positioned over said section 22 to prevent the first matrix precursor material 34 from reaching said section 22 during subsequent steps.

In the depicted embodiment, the covering unit 52 takes the form of a robot 52. More specifically, a robotic arm 52 performs the covering 14 by providing the covering elements 40 to the target section 22 of the layer 20. The robotic arm 52 is controlled by a computer 56 (not shown).

Figure 25 illustrates the layer 20 with the covering elements 40 adhering to said section 22.

Figure 26 depicts the next step in the process, where the precursor-provision unit 54 of the apparatus 50 is used to provide the first matrix precursor material 34 to a different section 24 (i.e., different from said section 22) of the layer 20.

The first matrix precursor material 34 is applied while said section 22 remains covered by the covering elements 40. This ensures that the first matrix precursor material 34 only reaches the exposed (different) section 24 of the layer 20.

In the depicted embodiment, the precursor-provision unit 54 takes the form of a robot 54. More specifically, a dispenser robot 54 applies the first matrix precursor material 34 to the different section 24 of the layer 20. The dispenser robot 54 is controlled by a computer 56 (not shown).

In an embodiment, the dispenser robot 54 is different or spatially separate from the robotic arm 52 that provides the covering elements 40. In another embodiment, a single robot 52, 54 such as a single robotic arm is equipped both with an effector for providing the covering elements 42 and a dispenser for applying the first matrix precursor material 34. According to an embodiment, the effector and the dispenser are provided at different positions of the robot. According to another embodiment the robot, or the robot arm, respectively, contains a tool holder equipped with the end effector when the covering elements 40 are provided. Prior to the provision of the first matrix precursor material 34, the end effector is removed from the tool holder, and the tool holder is equipped with the dispenser for the provision of the first matrix precursor material 34.

Figure 27 shows the layer 20 after the first matrix precursor material 34 has been applied to the different section 24.

The first matrix precursor material 34 impregnates the different section 24 of the layer 20, as described previously in the context of the method 10.

The first matrix precursor material 34 is converted into a first matrix material. The first matrix material and the different section 24 of the layer 20 are thus merged and form the first portion 32 of the composite fiber material 30, as described in the context of the method 10.

For this purpose, a curing unit and a compaction unit are optionally provided (not shown).

The curing unit is configured to carry out the process step of curing as described above in the context of the method 10. Respective curing units are known from the prior art, for example in the form of an oven, a heating tape, or an infrared heater.

The compaction unit is configured to carry out the process step of compacting as described above in the context of the method 10. Respective compaction units are known from the prior art, for example in the form of a vacuum enclosure such as a vacuum oven or a vacuum bagging.

Figure 28 illustrates the step where the removing unit 58 of the apparatus 50 is employed to remove the covering elements 40 from said section 22 of the layer 20.

The removing unit 58 detaches the covering elements 40, exposing the previously covered section 22.

In the depicted embodiment, the covering elements 40 are removed in a single step. In alternative embodiments, only a subset of the covering elements 40 is removed and the subsequent steps for forming a second portion 38 of the fiber composite material 30 are performed on the respective section. Thereafter, a different subset of the covering elements 40 is removed, and a third portion 46 of the fiber composite material 30 is formed in the respective section, as described in detail in the context of the method according to the fifth embodiment.

In the depicted embodiment, the removing unit 58 takes the form of a robot 58. More specifically, a robotic arm 58 performs the removal of the covering elements 40 from said section 22 of the layer 20. The robotic arm 58 is controlled by a computer 56 (not shown).

Preferably, the robotic arm 54 used for the provision of the covering elements 40 also serves as the robotic arm 58 for performing the removal of the covering elements 40 from said section 22 of the layer 20. This reduces the overall cost of the system.

Figure 29 shows the layer 20 after the covering elements 40 have been removed.

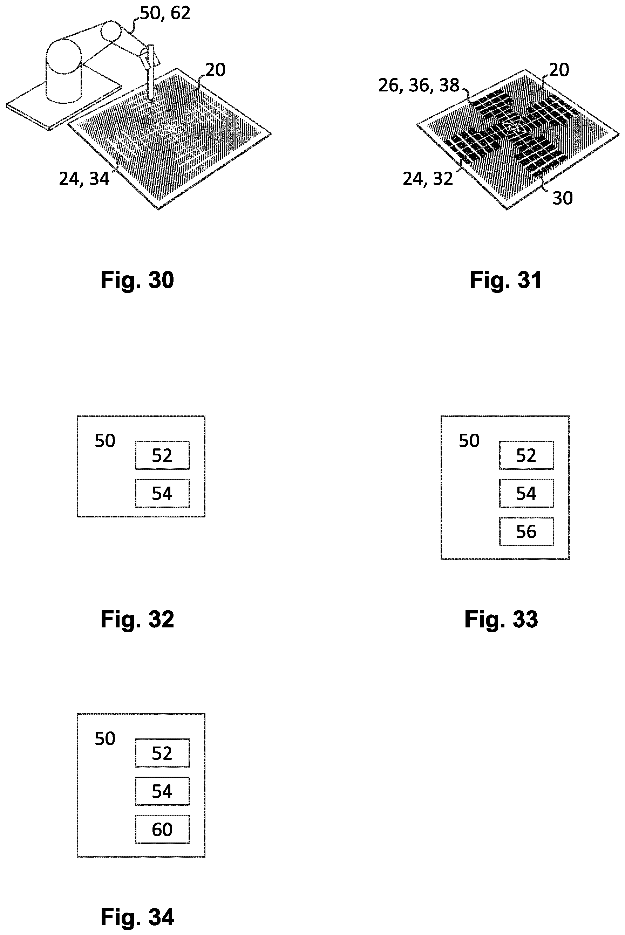

Figure 30 depicts the next step in the process, where a second precursor-provision unit 62 of the apparatus 50 is used to provide a second matrix precursor material 36.

The second matrix precursor material 36 and its provision are similar to the second matrix precursor material 36 and its provision as described in the context of the method 10 according to the foregoing embodiments.

In the depicted embodiment, the second precursor-provision unit 62 takes the form of a robot 62. The robot 62 is similar to the robot 54 described above in the context of the precursor-provision unit 54.

According to an embodiment, a single precursor-provision unit 54, 62 is used as both the precursor-provision unit 54 and the second precursor-provision unit 62. According to alternative embodiments, separate units, for example separate robots, are provided as the first precursor-provision unit 54 and the second precursor-provision unit 62.

The second matrix precursor material 36 is converted into a second matrix material. The second matrix material and the section 26 of the layer 20 are thus merged and form the second portion 38 of the composite fiber material 30, as described in the context of the method 10.

For the conversion of the second matrix precursor material 36 into the second matrix material, the curing unit and the compaction unit described above are optionally applied.

Figure 31 illustrates the final fiber composite material 30.

In this embodiment, the first matrix material is an elastomer in the form of silicone, and the second matrix material is epoxy resin. The fiber composite material 30 being fabricated is a foldable panel for supporting photovoltaic cells on a satellite. The apparatus 50, with its integrated covering unit 52, precursor-provision unit 54, and removing unit 58, provides a precise and controlled method 10 for fabricating multi-matrix fiber composite materials 30, ensuring that different sections of the layer 20 are accurately processed with the appropriate matrix precursor materials.

Figure 32 depicts a schematic representation of the apparatus 50 according to an embodiment, including the covering unit 52 and the precursor-provision unit 54. The covering unit 52 is adapted to cover a section 22 of the layer 20 of material comprising fibers using magnetic force. The precursor-provision unit 54 is adapted to provide 16 the first matrix precursor material 34 to a different section 24 of the layer 20 while said section 22 of the layer 20 is covered.

Figure 33 depicts a schematic representation of the apparatus 50 according to another embodiment similar to the embodiment of figure 32, further comprising a computer 56. The computer 56 comprises at least one processor and at least one memory and is operationally coupled to both the covering unit 52 and the precursor-provision unit 54. The computer 56 is adapted to control the covering unit 52 to perform the covering of said section 22 of the layer 20 and to control the precursor-provision unit 54 to perform the providing 16 of the first matrix precursor material 34.

Figure 34 depicts a schematic representation of the apparatus 50 according to another embodiment similar to the embodiment of figure 32, further comprising a curing unit 60. The curing unit 60 is adapted to cure the first matrix precursor material 34 to convert it into a first matrix material. This addition enables the apparatus 50 to complete the fabrication process by curing the first matrix precursor material 34 applied to the fiber composite material 30.

According to another embodiment (not shown) the apparatus 50 is similar to the apparatus 50 described in the context of Fig. 32, further comprising the computer 56 and the curing unit 60.

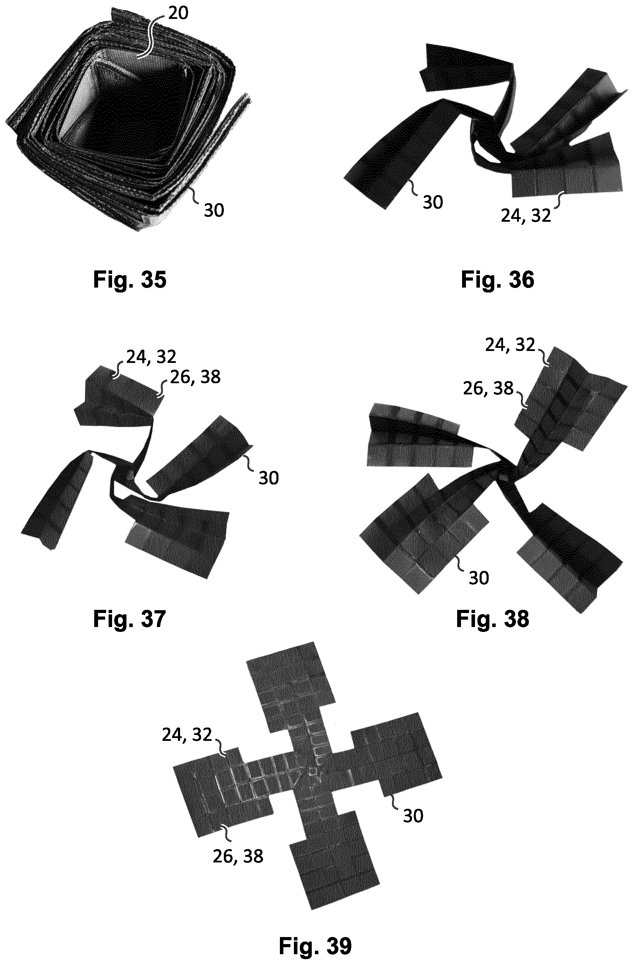

Figures 35 to 39 illustrate various stages and configurations of a component comprising the fiber composite material 30. According to the example, the component is a panel, and more specifically a foldable panel for supporting photovoltaic cells on a satellite. The material comprising the fibers is a woven fabric of carbon fibers, and the first matrix material is an elastomer in the form of silicone. The second matrix material is cured epoxy resin.

Figure 35 shows the panel in a compact, folded state. The layer 20 of material comprising fibers is visible, indicating the woven fabric structure. This compact configuration is for storage or transport purposes until the beginning of deployment.

Figure 36 illustrates the initial stages of unfolding the panel. Figure 37 depicts the panel further unfolded. Figure 38 shows the panel in an even more advanced stage of deployment.

Figure 39 illustrates the panel in a fully deployed state. The sections 24, 32 and 26, 38 are completely unfolded, forming a cross-like structure. This configuration is optimal for the intended use on a satellite, providing a stable and extensive surface for mounting photovoltaic cells. The deployment mechanism ensures that the material can transition from a compact state for storage to a fully extended state for operational use.

In these figures, the different portions 32, 38 of the fiber composite material 30 have distinct mechanical properties due to the different matrix materials used. The first matrix material (silicone elastomer) provides flexibility and elasticity, while the second matrix material (epoxy resin) offers rigidity and structural support. This combination allows the material to be both foldable and strong, suitable for the harsh conditions of space.

The example demonstrates the versatility and functionality of the fiber composite material 30, highlighting its application in aerospace technology, particularly for supporting photovoltaic cells on satellites. The ability to fold and unfold efficiently is a critical feature for space missions, where compact storage and reliable deployment are essential.

## Claims

1. A method (10) for fabricating a fiber composite material (30), the method (10) comprising:
providing (12) a layer (20) of a material comprising fibers;
covering (14) a section (22) of said layer (20); and
providing (16), for forming a first portion (32) of the fiber composite material (30), a first matrix precursor material (34) to a different section (24) of the layer (20);
wherein the first matrix precursor material (34) is provided to the different section (24) of the layer while said section (22) of the layer (20) is covered;
**characterized in that**
the covering (14) of said section (22) of the layer (20) comprises adhering (18) a covering element (40, 40a, 40b, 42) to said section (22) of the layer (20) using magnetic force.

2. The method (10) of claim 1, wherein:
the process step of covering (14) and/or the covering element (40, 40a, 40b, 42) adhered to said section (22) of the layer (20) are/is adapted to prevent the first matrix precursor material (34) from reaching said section (22) of the layer (20); and/or
the different section (24) of the layer (20) is different from said section (22) of the layer (20); and/or
the different section (24) of the layer (20) is not subject to the covering (14), in particular, while the first matrix precursor material (34) is provided; and/or
the different section (24) of the layer (20) is exposed while the first matrix precursor material (34) is provided to the different section (24) of the layer (20); and/or
the covering element (40, 40a, 40b, 42) comprises a magnet, such as an electromagnet or a permanent magnet, such as a ferromagnet with a remanent polarization during the adhering (18); and/or
the covering element (40, 40a, 40b, 42) comprises a first covering element (40a) and a second covering element (40b), wherein, during the covering (14) of said section (22) of the layer (20), the first covering element (40a) and the second covering element (40b) are arranged on opposite sides of said section (22) of the layer (20) and the first covering element (40a) and the second covering element (40b) adhere to each other using the magnetic force to promote the adhering (18) of the covering element (40, 40a, 40b, 42) to said section (22) of the layer (20), wherein, optionally, one of the first covering element (40a) and the second covering element (40b) comprises a magnet,
such as an electromagnet or a permanent magnet, such as a ferromagnet with a remanent polarization during the adhering (18), and, further optionally, the other one of the first covering element (40a) and the second covering element (40b) comprises a magnet or comprises a ferromagnetic material; and/or
wherein providing (16) the first matrix precursor material (34) to the different section (24) of the layer (20) comprises impregnating the fibers of the different section (24) of the layer (20) with the first matrix precursor material (34);
wherein providing (16) the first matrix precursor material (34) to the different section (24) of the layer (20) comprises merging the fibers of the different section (24) of the layer (20) with the first matrix precursor material (34) and/or bonding the fibers of the different section (24) of the layer (20) and the first matrix precursor material (34); and/or
wherein the layer (20) extends continuously and/or fibers of the layer (20) extend continuously from said section (22) of the layer (20) to the different section (24) of the layer (20).

3. The method (10) of claim 1 or 2, the fiber composite material (30) being a multi-matrix fiber composite material (30) and the method (10) being a method (10) for fabricating the multi-matrix fiber composite material (30), the method (10) further comprising:
after providing (16) the first matrix precursor material (34) to the different section (24) of the layer (20), removing the covering element (40, 40a, 40b, 42) from said section of the layer (20); and
providing, for forming a second portion (38) of the fiber composite material (30), a second matrix precursor material (36) to a further section (26) of the layer (20), the further section (26) of the layer (20) being comprised in said section (22) of the layer (20) which was covered while the first matrix precursor material (34) was provided,
wherein, optionally:
the removing of the covering element(s) (40, 40a, 40b, 42) from said section of the layer (20) is performed after the fibers are merged or impregnated with the first matrix precursor material (34); and/or
the removing of the covering element(s) (40, 40a, 40b, 42) from said section of the layer (20) is performed with a surface of the first matrix precursor material (34) being in a solid state or with the first matrix precursor material (34) being in a solid state; and/or
the multi-matrix fiber composite material (30) is a fiber composite material (30) comprising at least two matrix materials merged with the layer (20), wherein, optionally, the at least two matrix materials comprise the first matrix material and the second matrix material; and/or
the method further comprises covering the first portion (32) of the fiber composite material (30) while the second matrix precursor material (36) is provided to the further section (26) of the layer (20), wherein, preferably, the covering of the first portion (32) of the fiber composite material (30) is performed to prevent the second matrix precursor material (36) from reaching the first portion (32) of the fiber composite material (30).

4. The method (10) according to any of the preceding claims, which comprises:
covering (14) a plurality of sections (22, 26, 28) of the layer (20), the covering (14) of the plurality of sections (22, 26, 28) of the layer (20) comprising the covering (14) of said section (22) of the layer (20) according to claim 1, and the plurality of sections (22, 26, 28) of the layer (20) comprising said section (22) of the layer (20) according to claim 1;
wherein the covering (14) of the plurality of sections (22, 26, 28) of the layer (20) comprises adhering (18) a plurality of covering elements (40, 40a, 40b, 42) to the sections (22, 26, 28) of the layer (20) using magnetic force, wherein the adhering (18) of the plurality of covering elements (40, 40a, 40b, 42) to the sections (22, 26, 28) of the layer (20) comprises the adhering (18) of the covering element (40, 40a, 40b, 42) to said section (22) of the layer (20) according to claim 1, and wherein the plurality of covering elements (40, 40a, 40b, 42) comprises the covering element (40, 40a, 40b, 42) according to claim 1;
wherein, preferably, the process step of covering (14) the plurality of sections (22, 26, 28) of the layer (20) is performed prior to providing (16) the first matrix precursor material (34).

5. The method (10) according to claim 4 referring back to claim 3,
wherein the process step of covering (14) the plurality of sections (22, 26, 28) of the layer (20) comprises covering (14) an additional section (28) of the layer (20), the covering (14) of the additional section (28) of the layer (20) comprising adhering (18) an additional covering element (42) of the plurality of covering elements (40, 40a, 40b, 42) to the additional section (28) of the layer (20) using magnetic force; and
wherein said additional section (28) of the layer (20) is covered using the additional covering element (42) while the first matrix precursor material (34) is provided to the different section (24) of the layer (20) and while the second matrix precursor material (36) is provided to the further section (26) of the layer (20);
wherein the method (10) further comprises:
after providing the second matrix precursor material (36) to the further section (26) of the layer (20), removing the additional covering element (42) from the additional section (28) of the layer (20); and
providing, for forming a third portion (46) of the fiber composite material (30), a third matrix precursor material (44) to at least a portion of the additional section (28) of the layer (20) or to the additional section (28) of the layer (20).

6. The method (10) according to any of the preceding claims, wherein the covering (14) of said section (22) of the layer (20) comprises:
providing the covering element (40, 40a, 42) on one side of said section (22) of the layer (20); and
providing a counter-element (40b, 64) on the opposite side of said section (22) of the layer (20);
wherein the covering element (40, 40a, 42) and the counter-element (40b, 64) are adapted to provide an attractive magnetic force between them; and
wherein the covering element (40, 40a, 42) and the counter-element (40b, 64) are arranged on the opposite sides of said section (22) of the layer (20) such that the attractive magnetic force between them exerts a compressive force onto said section (22) of the layer (20);
wherein, optionally:
the covering element (40, 40a, 42) has one or all the features described above in the context of the first covering element (40a); and/or
the counter-element (40b, 64) has one or all the features described above in the context of the second covering element (40b).

7. The method (10) according to any of the preceding claims,
wherein the layer (20) of material comprising fibers comprises at least one of the following or is one of the following: mesh and fabric, such as woven fabric, knitted fabric, non-woven fabric, laid fabric, braid, gauze, wound textile, embroidered fabric;
wherein the fibers of the material comprise at least one of the following or are composed of one of the following: carbon fibers; glass fibers, such as e-glass fibers; polymer fibers such as polymer fibers containing at least one of the following: polyester, polyethylene terephthalate, polypropylene, polyamide, polylactic acid, polyacrylonitrile, spandex, viscose; ceramic fibers; stone fibers such as basalt fibers; natural fibers such as flax fibers, hemp fibers and/or jute fibers; and/or
wherein the fibers of the material comprise at least one of the following or are composed of one of the following: carbon fibers; glass fibers, such as e-glass fibers; polymer fibers such as polymer fibers containing at least one of the following: polyester, polyethylene terephthalate, polypropylene, polyamide, polylactic acid, polyacrylonitrile, spandex, viscose; and/or
wherein the first matrix material comprises or is a polymer, such as a thermosetting polymer or a thermoplastic polymer or a polymeric elastomer; wherein, optionally, the thermosetting polymer/the thermoplastic polymer is a thermosetting polymer/a thermoplastic polymer with additives or a thermosetting polymer/a thermoplastic polymer without additives; and/or
wherein the first matrix precursor material (34) is a precursor material for the first matrix material; and/or
wherein the first matrix precursor material (34) comprises or is a precursor material for a polymer, such as a thermosetting polymer or a thermoplastic polymer or a polymeric elastomer; and/or
wherein the first matrix precursor material (34), and optionally the second and/or the third matrix precursor material (44), comprises or is a prepolymer or a synthetic resin; and/or
wherein the second matrix material and/or the third matrix material are **characterized by** features corresponding to the features above characterizing the first matrix material; and/or
wherein the second matrix precursor material (36) and/or the third matrix precursor material (44) comprise(s) a precursor material for a polymer, such as a thermosetting polymer or a thermoplastic polymer or a polymeric elastomer.

8. The method (10) according to claim 4, optionally in combination with any other of the preceding claims,
wherein the layer (20) is provided above a substrate (40b, 64);
wherein the substrate (40b, 64) and the covering elements (40, 40a, 40b, 42) are adapted to provide an attractive magnetic force between the substrate (40b, 64) and each of the covering elements (40, 40a, 40b, 42), in particular when they are in contact with each other;
wherein covering (14) the plurality of sections (22, 26, 28) of the layer (20) comprises arranging the covering elements (40, 40a, 40b, 42) over the layer (20) above the substrate (40b, 64) to adhere the plurality of covering elements (40, 40a, 40b, 42) to the sections (22, 26, 28) of the layer (20) using the attractive magnetic force between the substrate (40b, 64) and the covering elements (40, 40a, 40b, 42) as the magnetic force;
wherein, optionally,
the method (10) comprises providing an anti-sticking layer between the substrate (40b, 64) and the layer (20); and/or
the method (10) comprises providing an anti-sticking element between the layer (20) and the covering elements (40, 40a, 40b, 42); and/or
the substrate (40b, 64) is a ferromagnetic substrate (40b, 64), and each covering element (40, 40a, 40b, 42) of the plurality of covering elements (40, 40a, 40b, 42) comprises a magnet; and/or
the substrate (40b, 64) and the covering elements (40, 40a, 40b, 42) have one or all the features described above in the context of the first covering element (40a) and the second covering element (40b), for example the substrate (40b, 64) having the features of one of the first covering element (40a) and the second covering element (40b), and the covering elements (40, 40a, 40b, 42) having the features of the other one of the first covering element (40a) and the second covering element (40b) or vice versa.

9. The method (10) according to any of the previous claims, which further comprises curing the first matrix precursor material (34) to convert it into a first matrix material (32);
wherein, optionally:
the method (10) further comprises curing the second matrix precursor material (36) to convert it into a second matrix material and/or curing the third matrix precursor material (44) to convert it into a third matrix material; and/or
the first matrix material is adapted to provide a mechanical property different from a corresponding mechanical property of the second matrix material, and optionally different from a corresponding mechanical property of the third matrix material, wherein, optionally, the mechanical property comprises at least one of the following or is one of the following: elasticity, flexibility, ductility, provision of an anti-slip surface; and/or
the curing of the first matrix precursor material (34) is performed prior to the removing of the covering element(s) (40, 40a, 40b, 42) from said section of the layer (20); and/or
the first matrix material is adapted to provide a chemical property different from a corresponding chemical property of the second matrix material, and optionally different from a corresponding chemical property of the third matrix material, wherein, optionally, the chemical property comprises at least one of the following or is one of the following: fire resistance, UV resistance, moisture resistance, bio-degradability; and/or
the first matrix material is adapted to provide an electrical conductivity and/or magnetic properties different from an electrical conductivity and/or
magnetic properties of the second matrix material, and optionally different from an electrical conductivity and/or magnetic properties of the third matrix material; and/or
the method (10) optionally further comprises generating a transition region (48) between the first matrix material and the second matrix material, wherein, preferably, the method (10) further comprises controlling an extension of the transition region (48) by controlling a strength of the magnetic force and/or by introducing a region of enhanced density in the layer (20); and/or
the method (10) optionally further comprises compacting the first matrix precursor material (34) prior to the curing of the first matrix precursor material (34) and/or during the curing of the first matrix precursor material (34); and/or
the method (10) optionally further comprises compacting the second and/or
the third matrix precursor material (44) prior to the curing of the second and/or of the third matrix precursor material (44) and/or during the curing of the second and/or of the third matrix precursor material (44); and/or
wherein the first portion (32) of the fiber composite material (30) corresponds to or comprises the first matrix material; and/or
wherein the second portion (38) of the fiber composite material (30) corresponds to or comprises the second matrix material; and/or
wherein the third portion (46) of the fiber composite material (30) corresponds to or comprises the third matrix material.

10. An apparatus (50) for fabricating a fiber composite material (30), the apparatus (50) comprising:
a covering unit (52) adapted to cover a section (22) of a layer (20) of a material (30) comprising fibers, wherein the covering (14) of said section (22) of the layer (20) comprises adhering (18) a covering element (40, 40a, 40b, 42) to said section (22) of the layer (20) using magnetic force; and
a precursor-provision unit (54) adapted to provide, for forming a first portion (32) of the fiber composite material (30), a first matrix precursor material (34) to a different section (24) of the layer (20), wherein the first matrix precursor material (34) is provided to the different section (24) of the layer while said section (22) of the layer (20) is covered, and wherein the different section (24) of the layer (20) is not subject to the covering (14).

11. The apparatus (50) according to claim 10, wherein
the covering unit (52) is a robotic covering unit; and/or
the covering unit (52) comprises a first robot adapted to perform the covering (14) of said section (22) of the layer (20); and/or
the precursor-provision unit (54) is a robotic precursor-provision unit; and/or
the precursor-provision unit (54) comprises a second robot adapted to perform the providing (16) of the first matrix precursor material (34),
wherein, optionally, the second robot is different from the first robot, or a single robot is adapted to provide both the first robot and the second robot; and/or
the apparatus (50) comprises the covering element (40, 40a, 40b, 42) or a plurality of covering elements (40, 40a, 40b, 42) comprising the covering element (40, 40a, 40b, 42).

12. The apparatus (50) according to claim 10 or claim 11, further comprising a computer (56), the computer (56) comprising at least one processor and at least one memory, the computer (56) being operationally coupled to the covering unit (52) and to the precursor-provision unit (54), wherein
the computer (56) is adapted to control the covering unit (52) to perform the covering (14) of said section (22) of the layer (20); and
the computer (56) is adapted to control the precursor-provision unit (54) to perform the providing (16) of the first matrix precursor material (34).

13. The apparatus (50) according to any of claims 10 to 12, which further comprises a removing unit (58) adapted to remove the covering element (40, 40a, 40b, 42) from said section (22) of the layer (20);
wherein, optionally:
the removing unit (58) is a robotic removing unit; and/or
the removing unit (58) comprises a third robot adapted to perform the removing of the covering element (40, 40a, 40b, 42) from said section (22) of the layer (20);
wherein, optionally, the third robot is different from the first robot, or a single robot is adapted to provide both the first robot and the third robot; and/or
the computer (56) is adapted to control the removing unit (58) to perform the removing of the covering element (40, 40a, 40b, 42) from said section (22) of the layer (20).

14. The apparatus (50) according to any of claims 10 to 13, which further comprises a curing unit (60) adapted to cure the first matrix precursor material (34) to convert it into a first matrix material (34).

15. A computer program comprising instructions which, when the computer program is executed by a computer (56), such as the computer (56) of claim 11, cause the computer (56) to carry out the method (10) according to any of claims 1 to 9.
